# EUROPÄISCHE PATENTANMELDUNG

(11) **EP 2 840 070 A1**
(43) Veröffentlichungstag der Anmeldung: **25.02.2015**
(21) Anmeldenummer: 13180856.0
(22) Anmeldetag: 19.08.2013
(51) Int. Cl.: C02F 3/12, C02F 101/30, C02F 103/34

(54) **Vorrichtung und Verfahren zur Wasserreinigung mit Adsorbens und Belebtschlammzugabe**

(71) Anmelder: Wabag Wassertechnik AG, 8401 Winterthur (CH)
(72) Erfinder: Baggenstos, Martin, 8404 Winterthur (CH)
(74) Vertreter: KLIMENT & HENHAPEL

(57) **Zusammenfassung**

Gezeigt wird ein Verfahren zur Wasserreinigung, bei welchem einem zu behandelnden Wasser (1) zuerst frisches Adsorbens (6) in Pulverform zudosiert und das zu behandelnde Wasser mit dem Adsorbens vermischt wird und anschließend das Adsorbens abgetrennt wird, wobei dem zu behandelndem Wasser vor dem Abtrennen des Adsorbens zur besseren Flockenbildung Belebtschlamm (7) zugegeben wird.

## Beschreibung

### GEBIET DER ERFINDUNG

Verfahren zur Wasserreinigung, bei welchem einem zu behandelnden Wasser zuerst frisches Adsorbens in Pulverform zudosiert und das zu behandelnde Wasser mit dem Adsorbens vermischt wird und anschließend das Adsorbens abgetrennt wird, sowie eine entsprechende Vorrichtung.

### STAND DER TECHNIK

Organische Mikroverunreinigungen und schwer abbaubare Substanzen im Abwasser können von der biologischen Reinigungsstufe einer Kläranlage oft nur unzureichend eliminiert werden. Unter Mikroverunreinigungen versteht man organische Spurenstoffe, die in sehr tiefen Konzentrationen (ng bis µg pro Liter) in Trink- und Abwasser sowie in Gewässern vorkommen. Dabei handelt es sich um Inhaltsstoffe von Pflanzenschutzmitteln, Medikamenten, Bioziden, Reinigungsmitteln, Farben etc., die aus verschiedensten Quellen wie Landwirtschaft, Haushalt und Industrie freigesetzt werden. Mikroverunreinigungen können sich negativ auf Mensch und Umwelt auswirken.

Wegen der unzureichenden Elimination von organischen Mikroverunreinigungen und/oder schwer abbaubaren Substanzen im Abwasser durch die biologische Reinigungsstufe einer Kläranlage kann eine Zusatzbehandlung mittels oxidativer und/oder adsorptiver Verfahren erforderlich sein. Unter diesen Verfahren ist die Nachbehandlung mittels Adsorption, insbesondere an zugegebener Pulveraktivkohle, eine mögliche Lösung, wobei anschließend eine möglichst perfekte Abtrennung des Adsorbens, etwa der Pulveraktivkohle, notwendig ist, damit das Adsorbens nicht das gereinigte Abwasser zusätzlich belastet. Diese Verfahrenstechnik kann aber auch in der Aufbereitung von Trinkwasser oder Prozesswasser für die Industrie eingesetzt werden.

Die Abtrennung des Adsorbens kann mittels Sedimentations-, Filtrations- oder Flotationsprozessen erfolgen oder auch Kombinationen davon. Die meisten dieser Prozesse erfordern eine gute Flockung des Adsorbens-Wassergemisches. Die Flockung erfolgt normalerweise durch Zugabe von Fäll- und/oder Flockungshilfsmitteln. Diese Fäll- und Flockungshilfsmittel stellen nun ihrerseits wieder eine zusätzliche Belastung des zu reinigenden Wassers dar, führen zu Betriebskosten bei der Beschaffung und im Zusammenhang mit der zusätzlichen Schlammproduktion und können den gewünschten Flockungseffekt manchmal nicht sicherstellen.

### DARSTELLUNG DER ERFINDUNG

Es ist eine Aufgabe der vorliegenden Erfindung, ein Verfahren zur Wasserreinigung, bei welchem dem zu behandelnden Wasser Adsorbens in Pulverform zudosiert und nach einer Flockung mittels eines Trennprozesses (Sedimentation, Filtration oder Flotation) wieder abgetrennt wird, zur Verfügung zu stellen, wobei die zusätzliche Belastung des zu reinigenden Abwassers durch Fäll- und/oder Flockungshilfsmittel reduziert werden sowie die Flockenbildung hinsichtlich des Trennprozesses verbessert werden soll.

Diese Aufgabe wird durch ein Verfahren gemäß Anspruch 1 gelöst, welches dadurch gekennzeichnet ist, dass dem zu behandelnden Wasser vor dem Abtrennen des Adsorbens zur besseren Flockenbildung Belebtschlamm zugegeben wird, an den das Adsorbens anlagert und so weniger oder gar keine Fäll- und/oder Flockungshilfsmittel mehr notwendig sind, wobei bereits eine geringe Menge von Belebtschlamm ausreichend sein kann.

Belebtschlamm besteht aus Belebtschlammflocken, das heißt Kolonien von Mikroorganismen in Flockenfom, welche bei der biologischen Wasserreinigung, typischerweise Abwasserreinigung, nach dem Belebtschlammverfahren entstehen. Anlagen nach dem Belebtschlammverfahren können sowohl kontinuierlich, also. im Durchlaufbetrieb als auch diskontinuierlich (Batch-Betrieb; engl.: batch process) betrieben werden. Bei einer grundlegenden Form mit kontinuierlichem Betrieb benötigt das Belebtschlammverfahren drei Hauptkomponenten: das Belebungsbecken, das Nachklärbecken sowie die Rücklaufschlammförderung. Zulauf und Rücklaufschlamm aus dem Nachklärbecken gelangen zunächst in das Belebungsbecken, in dem das Gemisch aus Abwasser und Belebtschlamm belüftet wird. Hier finden die biologischen Vorgänge statt. Von hier fliesst das Schlamm-Wasser-Gemisch in das Nachklärbecken oder Absetzbecken zur Schlammabtrennung. Der Belebtschlamm wird im Nachklärbecken vom gereinigten Abwasser durch Sedimentation getrennt, durch sein Eigengewicht eingedickt, am Beckenboden abgezogen und (zum größten Teil) als sogenannter Rücklaufschlamm in das Belebungsbecken zurückgefördert. Dadurch wird eine hohe Belebtschlammkonzentration im Belebungsbecken und somit eine hohe Leistungsfähigkeit des Verfahrens erreicht. Das gereinigte und vom Belebtschlamm weitgehend befreite Abwasser verlässt das Nachklärbecken dabei zum Beispiel oben über ein Überlaufwehr. Die Belüftung des Abwasser-Belebtschlamm-Gemisches kann durch Oberflächenbelüfter, durch Einblasen von Druckluft oder durch Begasung mit Reinsauerstoff erfolgen. Dabei ist darauf zu achten, dass die Belüftung sowohl hinsichtlich der eingetragenen Menge als auch in Bezug auf die gleichmäßige Verteilung (vollständige Durchmischung) des Sauerstoffs ausreichend ausgelegt ist, um den für die biologischen Abbauprozesse notwendigen Sauerstoffbedarf der Mikroorganismen im gesamten Volumen des Belebungsreaktors zu decken.

Belebtsschlammflocken können jedoch auch in Nährstofflösungen spezifisch gezüchtet werden, ohne dass dabei Abwasser gereinigt wird oder vorliegt. Sofern der Belebtschlamm aus einer ohnehin stattfindenden Wasserreinigung entnommen werden kann, bei der solcher Schlamm anfällt, hat die Erfindung zusätzlich den Vorteil, dass keine oder weniger Kosten für Fäll- und/oder Flockungshilfsmittel entstehen.

Die Zugabe des Belebtschlammes erfolgt dabei vorzugsweise nach der Zugabe des Adsorbens. Die Dosierung erfolgt in Funktion des anschließenden Trennverfahrens und in Funktion der Dosierung des Adsorbens. Als Adsorbens kommt vorzugsweise Pulveraktivkohle zu Einsatz.

Aktivkohle wird in der Regel aus Steinkohle, Braunkohle oder Kokosnussschale gewonnen. Die Oberfläche wird so behandelt, dass gelöste oder gasförmige organische Stoffe an der Aktivkohle adsorbieren können. Oft wird in der Wasseraufbereitung grobkörnige Aktivkohle verwendet, welche in einem Festbettfilter eingesetzt werden kann. Als Alternative wird fein pulverisierte Aktivkohle (PAK) eingesetzt, bei welcher die Adsorptionsleistung aufgrund des größeren Oberflächen/Masse-Verhältnis höher ist als bei grobkörniger Aktivkohle.

In der Wasseraufbereitung kann Pulveraktivkohle mit dem zu reinigenden Wasser suspendiert werden und diesem so gelöste organische Stoffe (insbesondere Mikroverunreinigungen) entziehen. Dabei gilt: Je höher die Konzentration der PAK im Wasser, desto besser der Eliminierungsgrad von gelösten organischen Stoffen. Des Weiteren gilt: je länger die Kontaktzeit der PAK mit dem Wasser, desto höher der Eliminierungsgrad. Aktivkohle kann nur eine gewisse Menge an organischen Stoffen auf der Oberfläche adsorbieren. Ist eine gewisse Sättigung erreicht, wird die Aktivkohle wirkungslos gegenüber neuen Verunreinigungen. Aus diesem Grund muss kontinuierlich frische PAK dosiert werden.

Um sogenannte Mikroverunreinigungen oder schwer abbaubare Verbindungen ausreichend aus dem Wasser zu entfernen, ist es sinnvoll, wenn das Adsorbens (in der Regel PAK) im zu reinigenden Wasser eine Konzentration zwischen 1 und 1000 mg/l, vorzugsweise aber zwischen 5 und 100 mg/l aufweist.

Das erfindungsgemäße Verfahren kann vorteilhaft zur Nachbehandlung von biologisch gereinigten Abwässern verwendet werden, das zu reinigende Wasser hat also vor dem Zudosieren des Adsorbens und vor der Zugabe des Belebtschlammes eine biologische Reinigungsstufe durchlaufen.

Der Belebtschlamm kann dem zu behandelnden Wasser in Form von in einer Flüssigkeit suspendierten Flocken zugegeben wird, wobei die Flocken in einer Konzentration von 1-15 kg Trockensubstanz pro m³ Suspension, insbesondere in einer Konzentration von 2-5 kg Trockensubstanz pro m³ Suspension, vorliegen.

Zur Ermittlung des Trockensubstanzgehaltes (TS) werden in einem möglichen Verfahren 100 ml der Suspension entnommen. Ein sauberer Filter, der im Trockenschrank und dann im Exsikkator gelagert hat, wird auf einer Analysenwaage gewogen. Durch diesen Filter werden dann die 100 ml Suspension filtriert und in der Mikrowelle, im Trockenschrank oder durch Infrarot getrocknet. Der Filter wird danach wieder gewogen. Zieht man nun die Masse des sauberen Filters von jener des getrockneten Filters ab, so erhält man den Trockensubstanzgehalt in g/100 ml. Da der TS üblicherweise in "g/l" oder "kg/m³" angegeben wird, muss man das Ergebnis mit dem Faktor 10 multiplizieren.

Wenn diese biologische Reinigungsstufe nach dem Belebtschlammverfahren arbeitet, kann der zugegebene Belebtschlamm direkt aus der vorangehenden biologischen Reinigungsstufe stammen, was das Verfahren einfach macht.

Alternativ oder zusätzlich kann vorgesehen sein, dass zumindest ein Teil des Belebtschlammes aus einer biologischen Reinigungsstufe stammt, welche der Hauptstrom des zu behandelnden Wassers zuvor nicht durchlaufen hat oder welche nur durch einen Nebenstrom des zu reinigenden Wassers durchlaufen wurde. Der Belebtschlamm stammt also aus einer anderen biologischen Reinigungsstufe als jener des Hauptstromes des zu reinigenden Wassers. Dies kann der Fall sein, wenn die biologische Reinigungsstufe des zu reinigenden Wassers nicht nach dem Belebtschlammverfahren arbeitet oder nach dem Belebtschlammverfahren arbeitet, aber der Belebtschlamm für das erfindungsgemäße Verfahren ungünstige Eigenschaften aufweist.

Alternativ oder zusätzlich zu Belebtschlamm aus bestehenden biologischen Reinigungsstufen, die Teil des Wasserreinigungsverfahren sind, kann auch vorgesehen sein, dass zumindest ein Teil des Belebtschlammes eigens für die Anwendung im erfindungsgemäßen Verfahren in einer Nährlösung hergestellt wird, und zwar unabhängig von einer biologischen Reinigungsstufe für Wasser. Dies kann der Fall sein, wenn das erfindungsgemäße Verfahren dann eingesetzt wird, wenn das das Wasserreinigungsverfahren keine biologische Reinigungsstufe aufweist.

Falls das Adsorbens für den anschließenden Trennprozess nicht ausreichend gut an den Belebtschlamm adsorbiert, kann vorgesehen werden, zusätzlich auch Fällmittel und/oder Flockungshilfsmittel zuzugeben. Dies kann auch erfolgen, wenn der Trennprozess eine solche Zugabe erfordert oder wenn damit zusätzliche spezifische Effekte wie eine Ausfällung von gelösten Verbindungen (z.B. Phosphatfällung) erreicht werden soll.

Als Fällmittel kommen typischerweise Eisen- oder Aluminiumsalze in Lösung (z.B. FeCl3) zum Einsatz. Als Flockungshilfsmittel kommen typischerweise Polymere in Lösung zur Anwendung.

Die Abtrennung des Adsorbens nach der Flockung erfolgt durch Sedimentation, Filtration oder Flotation oder einer Kombination dieser Prozesse. Eine typische Kombination wäre eine Sedimentation oder Flotation mit einer nachgeschalteten Filtration. Die Sedimentation erfolgt in Absetzbecken. Die Filtration erfolgt mittels Raumfiltern, typischerweise 1- oder 2-Schichtfilter mit körnigem Filtermaterial oder Oberflächenfiltrationssystemen, typischerweise Mikrosiebe. Als Flotation kommt vorzugsweise eine Druckentspannungsflotation zum Einsatz.

Bei Abtrennung der gebildeten Flocken mittels Sedimentation kann vorgesehen sein, dass der bei der Sedimentation abgesetzten Schlamm, primär bestehend aus Adsorbens und Belebtschlamm, dem zu behandelnden Wasser vor der Abtrennung, insbesondere während des Flockungsprozesses, wieder zugegeben werden. Der abgesetzte Schlamm wird also im Kreislauf geführt und es wird weniger frischer Belebtschlamm benötigt. Diese Kreislaufführung ist auch bei Filtrations- und Flotationsprozessen denkbar, aber weniger erfolgsversprechend.

Die Vorrichtung zur Durchführung des erfindungsgemäßen Verfahrens umfasst zumindest:
- eine Dosiervorrichtung, mit welcher dem zu behandelnden Wasser frisches Adsorbens in Pulverform zudosiert werden kann,
- ein Kontakt- und Flockungsbecken, in welchem das zu behandelnde Wasser mit dem Adsorbens vermischt werden kann,
- eine Trennstufe zum Abtrennen von Adsorbens aus dem zu behandelnden Wasser, und ist dadurch gekennzeichnet, dass in Flussrichtung des zu behandelnden Wassers gesehen vor der Trennstufe eine Zugabeeinrichtung für Belebtschlamm vorgesehen ist. Die Zugabeeinrichtung für Belebtschlamm kann so angeordnet sein, dass der Belebtschlamm nach der Zugabe des Adsorbens zugegeben wird. Der Belebtschlamm kann etwa ebenfalls in das Kontakt- und Flockungsbecken zugegeben werden.

Dem Kontakt- und Flockungsbecken kann eine biologische Reinigungsstufe vorgeschaltet sein, aus welcher zu behandelndes Wasser in das Kontakt- und Flockungsbecken leitbar ist.

Weiters kann eine Rückführleitung vorgesehen sein, mit welcher in der Trennstufe gebildeter (abgetrennter) Schlamm aus der Trennstufe abgezogen wird und von der Trennstufe dem zu behandelnden Wasser vor der Trennstufe zugegeben werden kann.

Weitere Ausführungsvarianten der erfindungsgemäßen Vorrichtung werden in der Figurenbeschreibung erläutert.

Das erfindungsgemäße Verfahren und die entsprechende Vorrichtung werden insbesondere zur Elimination von Mikroverunreinigungen und von anderen schwer abbaubaren Verbindungen angewendet. Es ist vorzugsweise bei vorangehend biologisch gereinigtem Abwasser mit einem Anteil von gelöstem organischem Kohlenstoff von 1 bis 50 mg DOC/I (Dissolved Organic Carbon) nach der biologischen Reinigung anwendbar. Das Verfahren kann aber auch in der Aufbereitung von Trinkwasser oder Prozesswasser für die Industrie eingesetzt werden.

### WEGE ZUR AUSFÜHRUNG DER ERFINDUNG

Zur weiteren Erläuterung der Erfindung wird im nachfolgenden Teil der Beschreibung auf die Figuren Bezug genommen, aus der weitere vorteilhafte Ausgestaltungen, Einzelheiten und Weiterbildungen der Erfindung zu entnehmen sind. Es zeigen:
Fig. 1 die schematische Darstellung einer erfindungsgemäßen Wasserreinigungsanlage mit einer biologischer Vorstufe nach dem Belebtschlammverfahren,
Fig. 2 eine alternative Ausführungsform einer erfindungsgemäßen Wasserreinigungsanlage mit einer biologischer Vorstufe und einer separaten Stufe zur Herstellung von Belebtschlamm zur Flockung des Adsorbens.

Das zu behandelnde Wasser 1 wird einem strömungsoptimierten, durchmischten Kontakt- und Flockungsbecken 2 zugeführt, wo Adsorbens 6 und Belebtschlamm 7 zugegen werden, gegebenenfalls auch Fällmittel 8 und/oder Flockungshilfsmittel 9. Das so behandelte Wasser 3 fließt anschließend in eine Trennstufe 4, aus der das gereinigte Wasser 5 die Anlage verlässt oder weiter aufbereitet wird. Aus der Trennstufe 4 werden die zurückgehaltenen (abgetrennten) Stoffe in Form von mehr oder weniger dünnem Schlamm 12 ausgeschleust und weiter behandelt.

Bei Verwendung von Pulveraktivkohle als Adsorbens 6 wird eine Pulveraktivkohlesuspension in einem Vorlagebehälter 16 vorgehalten und von dort dem Kontakt- und Flockungsbecken 2 zudosiert. Die Dosierung erfolgt typischerweise mengenproportional in einem Bereich von vorzugsweise 5-100 mg/l (5-100 mg PAK pro I zu behandelndes Wasser). Die Dosierung kann aber auch in Funktion der Belastung des zu behandelnden Wassers angepasst werden, welche zum Beispiel über eine Messung der DOC-Konzentration (Dissolved Organic Carbon) oder dem SAK-Wert (Spektraler Absorptionskoeffizient) ermittelt werden kann.

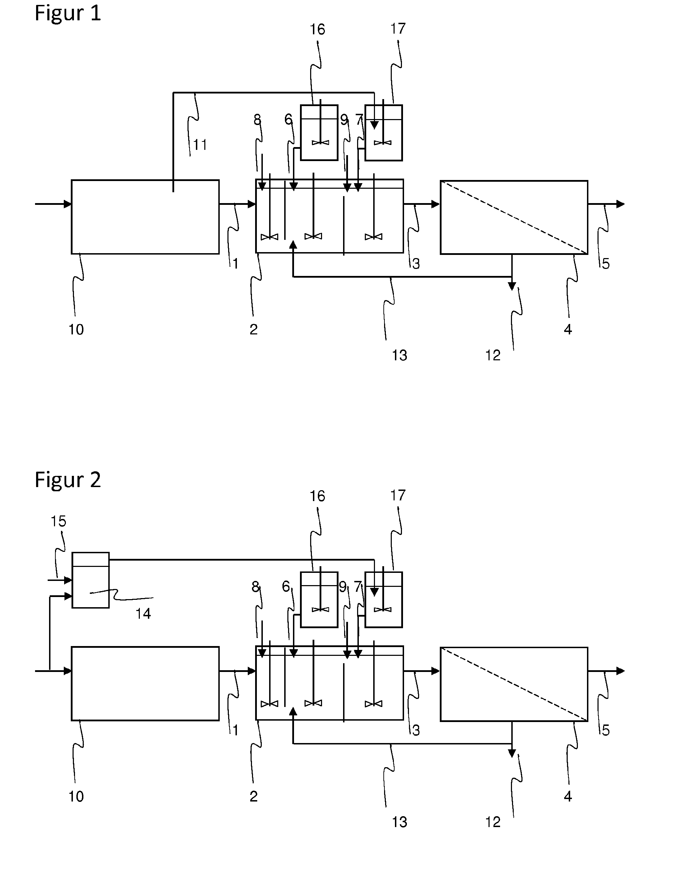

Der Belebtschlamm 7 wird ebenfalls in das Kontakt- und Flockungsbecken 2 zugegeben, vorzugsweise nach der Zugabe des Adsorbens 6. Sofern dem erfindungsgemäßen Verfahren eine biologische Vorstufe (Belebtschlammbiologie) 10 vorgeschaltet ist, deren Belebtschlamm verwendbar ist, kann der Belebtschlamm 7 direkt aus der Belebtschlammbiologie 10 entnommen werden und dosiert werden, was in der Figur als Strom von Belebtschlamm 11 aus der biologischen Vorstufe 10 gezeigt ist. Es ist auch denkbar, vor der Zugabe des Belebtschlamms einen Vorlagebehälter 17 zu haben, aus welchem die Zugabe erfolgt, wie dies in der Figur 1 und 2 ersichtlich ist. Ein solcher Vorlagebehälter 17 macht vor allem Sinn, wenn der Belebtschlamm nicht jederzeit aus der vorgeschalteten Belebtschlammbiologie 10 entnommen werden kann. Die Belebtschlammdosierung ist typischwerweise proportional zur Adsorbensdosierung und liegt im Bereich von 10% bis 250% der Adsorbensdosierung (Massenverhältnis Trockensubstanz Belebtschlamm zu Adsorbens).

Sofern ebenfalls Fällmittel 8 und/oder Flockungshilfsmittel 9 zugegeben werden, erfolgt die Zugabe ebenfalls ins Kontakt- und Flockungsbecken 2. Die Zugabe des Fällmittels 8 erfolgt dabei typischerweise noch vor der Zugabe des Adsorbens 6, allenfalls schon in der Zuführung des zu behandelnden Wassers 3 zum Kontakt- und Flockungsbecken 2. Die Zugabe eines Flockungshilfsmittels 9 erfolgt anschließend, typischerweise zusammen mit dem Belebtschlamm 7. Die Fällmittel und/oder Flockungshilfsmitteldosierung sind wie jene des Belebtschlammes 7 proportional zur Adsorbensdosierung. Falls Fällmittel 8 noch für spezifische Zwecke, wie zur Ausfällung von gelöstem Phosphat dient, kann die Dosierung auch anderweitig geregelt werden.

Das Kontakt- und Flockungsbecken 2 kann durch, insbesondere senkrechte, Trennwände unterteilt sein, die nicht die gesamte Höhe des Kontakt- und Flockungsbecken 2 einnehmen, sodass dieses in mehrere, zumindest teilweise voneinander getrennte Bereiche unterteilt wird. In jedem Bereich kann ein eigener Rührer vorgesehen sein, um die im entsprechenden Bereich zugegebenen Stoffe mit dem zu behandelnden Wasser 1 zu vermischen. So ist in den Fig. 1 und 2 ein erster Bereich für die Zugabe und Vermischung von Fällmittel 8 durch entsprechende Einrichtungen vorgesehen, anschließend ein zweiter Bereich für die Zugabe von Adsorbens 6 durch eine Dosiervorrichtung und schließlich ein dritter Bereich für die Zugabe von Belebtschlamm 7 durch eine entsprechende Einrichtung und gegebenenfalls für die Zugabe von Flockungshilfsmittel 9. Die Trennwand zwischen erstem und zweitem Bereich wird vom zu behandelnden Wasser an der Unterseite umströmt, die Trennwand zwischen zweitem und drittem Bereich an deren Oberseite.

In Figur 1 und 2 ist ebenfalls eine zumindest teilweise Rückführung von sogenanntem rückgeführten Schlamm 13 aus der Trennstufe 4 in das Kontakt- und Flockungsbecken 2 gezeigt. Diese Rückführung ist optional. Sie kann vor allem interessant sein, wenn als Trennverfahren eine Sedimentation Verwendung findet. Die Rückführleitung für den rückgeführten Schlamm 13 kann beispielsweise in den zweiten Bereich des Kontakt- und Flockungsbeckens 2 münden, in welchen das frische Adsorbens 6 eingebracht wird. Der übrige Schlamm 12, der in der Trennstufe 4 anfällt, wird aus dem Verfahren abgezogen und entsorgt.

Figur 2 zeigt eine alternative Ausführungsform zu Figur 1 die dadurch gekennzeichnet ist, dass der zugegebene Belebtschlamm 7 aus einem zusätzlichen Reaktor 14 zur Herstellung von Belebtschlamm stammt und nicht aus der vorgeschalteten biologischen Vorstufe 10. Dabei wird in Figur 2 der Reaktor 14 aus einem Nebenstrom des in der biologischen Vorstufe 10 zu behandelnden Wassers beschickt. Diese Ausführungsform kann notwendig sein, wenn das Verfahren der biologischen Vorstufe 10 eine Biofiltration oder ein anderes Trägerbiologieverfahren ohne Belebtschlamm ist oder das Verfahren der biologischen Vorstufe 10 zwar ein Belebtschlammverfahren ist, aber einen Belebtschlamm mit schlechten Flockungseigenschaften produziert. Als Belebtschlammverfahren in der Biologie des Reaktors 14 kann zum Beispiel ein Sequencing Batch Verfahren zur Anwendung kommen. Gerade in diesem Fall ist es sinnvoll, die Zugabe von Belebtschlamm 7 in das Kontakt- und Flockungsbecken 2 über einen Vorlagebehälter 17 zu machen, wie dies in Figur 2 gezeigt ist.

Im Falle einer Aufbereitung von Trinkwasser oder Prozesswasser ist dem erfindungsgemäßen Verfahren in der Regel gar keine biologische Wasserreinigung vorgeschaltet, welche Belebtschlamm produzieren könnte. In diesem Fall ist es denkbar, eine Belebtschlammbiologie im Reaktor 14 zu betreiben, welche mit einer Nährlösung 15 versorgt wird, welche die notwendigen Substanzen für das Wachstum von Mikroorganismen und somit den Aufbau von Belebtschlamm enthält. In Fig. 2 wäre dann die biologische Reinigungsstufe 10 nicht vorhanden, sondern lediglich der Reaktor 14, der Belebtschlamm für den Vorlagebehälter 17 liefert.

### BEZUGSZEICHENLISTE

- 1: zu behandelndes Wasser
- 2: Kontakt- und Flockungsbecken
- 3: behandeltes Wasser (Wasser nach Kontakt- und Flockungsbecken 2)
- 4: Trennstufe (Sedimentation, Filtration, Flotation)
- 5: gereinigtes Wasser (nach Trennstufe 4)
- 6: Adsorbens
- 7: Belebtschlamm
- 8: Fällmittel
- 9: Flockungshilfsmittel
- 10: biologische Reinigungsstufe (biologische Vorstufe)
- 11: Belebtschlamm aus biologischer Vorstufe 10
- 12: Schlamm nach Trennstufe 4
- 13: rückgeführter Schlamm nach Trennstufe 4
- 14: Reaktor zur Herstellung von Belebtschlamm
- 15: Nährlösung
- 16: Vorlagebehälter für Adsorbens (PAK)
- 17: Vorlagebehälter für Belebtschlamm

## Patentansprüche

1. Verfahren zur Wasserreinigung, bei welchem
- einem zu behandelnden Wasser (1) zuerst frisches Adsorbens (6) in Pulverform zudosiert und das zu behandelnde Wasser mit dem Adsorbens vermischt wird
- und anschließend das Adsorbens abgetrennt wird,
**dadurch gekennzeichnet,**
- **dass** dem zu behandelndem Wasser vor dem Abtrennen des Adsorbens zur besseren Flockenbildung Belebtschlamm (7) zugegeben wird.

2. Verfahren nach Anspruch 1, **dadurch gekennzeichnet, dass** als Adsorbens (6) Pulveraktivkohle eingesetzt wird.

3. Verfahren nach Anspruch 1 oder 2, **dadurch gekennzeichnet, dass** das zu behandelnde Wasser (1) vor dem Zudosieren des Adsorbens (6) und vor der Zugabe von Belebtschlamm (7) eine biologische Reinigungsstufe (10) durchlaufen hat.

4. Verfahren nach einem der Ansprüche 1 bis 3, **dadurch gekennzeichnet, dass** der Belebtschlamm (7) in Form von in einer Flüssigkeit suspendierten Flocken zugegeben wird, wobei die Flocken in einer Konzentration von 1-15 kg Trockensubstanz pro m³ Suspension, insbesondere in einer Konzentration von 2-5 kg Trockensubstanz pro m³ Suspension, vorliegen.

5. Verfahren nach einem der Ansprüche 1 bis 4, **dadurch gekennzeichnet, dass** die Belebtschlammzugabe proportional zur Adsorbensdosierung erfolgt.

6. Verfahren nach einem der Ansprüche 1 bis 5, **dadurch gekennzeichnet, dass** das Massenverhältnis von Trockensubstanz des zugegebenen Belebtschlammes (7) zu zudosiertem Adsorbens (6) im Bereich von 10% bis 250% liegt.

7. Verfahren nach einem der Ansprüche 1 bis 6, **dadurch gekennzeichnet, dass** zumindest ein Teil des Belebtschlammes (7) aus einer biologischen Reinigungsstufe (10) für Wasser stammt, welche das zu behandelnde Wasser (1) zuvor durchlaufen hat.

8. Verfahren nach einem der Ansprüche 1 bis 7, **dadurch gekennzeichnet, dass** zumindest ein Teil des Belebtschlammes (7) aus einer biologischen Reinigungsstufe für Wasser stammt, welche das zu behandelnde Wasser (1) zuvor nicht durchlaufen hat.

9. Verfahren nach einem der Ansprüche 1 bis 8, **dadurch gekennzeichnet, dass** zumindest ein Teil des Belebtschlammes (7) eigens für die Flockenbildung hergestellt wird, und zwar unabhängig von einer biologischen Reinigungsstufe (10) für Wasser.

10. Verfahren nach einem der Ansprüche 1 bis 9, **dadurch gekennzeichnet, dass** zusätzlich zum Adsorbens (6) und zum Belebtschlamm (7) auch Fällmittel (8) und/oder Flockungshilfsmittel (9) zugegeben werden.

11. Verfahren nach einem der Ansprüche 1 bis 10, **dadurch gekennzeichnet, dass** die Abtrennung der durch die Zugabe von Belebtschlamm (7) gebildeten Flocken nur mittels Sedimentation, Filtration oder Flotation erfolgt, oder mit einer Kombination aus Sedimentation und Filtration oder mit einer Kombination aus Flotation und Filtration.

12. Verfahren nach Anspruch 11, **dadurch gekennzeichnet, dass** der bei der Abtrennung der gebildeten Flocken gebildete Schlamm (13) teilweise wieder dem zu behandelnden Wasser (1) vor der Abtrennung zugegeben wird.

13. Vorrichtung zur Durchführung des Verfahrens nach einem der Ansprüche 1 bis 12, umfassend zumindest
- eine Dosiervorrichtung, mit welcher dem zu behandelnden Wasser (1) frisches Adsorbens (6) in Pulverform zudosiert werden kann,
- ein Kontakt- und Flockungsbecken (2), in welchem das zu behandelnde Wasser (1) mit dem Adsorbens vermischt werden kann,
- eine Trennstufe (4) zum Abtrennen von Adsorbens (6) aus dem zu behandelnden Wasser (1),
**dadurch gekennzeichnet, dass** in Flussrichtung des zu behandelnden Wassers (1) gesehen vor der Trennstufe (4) eine Zugabeeinrichtung für Belebtschlamm (7) vorgesehen ist.

14. Vorrichtung nach Anspruch 13, **dadurch gekennzeichnet, dass** dem Kontakt- und Flockungsbecken (2) eine biologische Reinigungsstufe (10) vorgeschaltet ist, aus welcher zu behandelndes Wasser (1) in das Kontakt- und Flockungsbecken (2) leitbar ist.

15. Vorrichtung nach Anspruch 13 oder 14, **dadurch gekennzeichnet, dass** eine Rückführleitung vorgesehen ist, mit welcher in der Trennstufe (4) gebildeter Schlamm (13) von der Trennstufe (4) dem zu behandelnden Wasser (1) vor der Trennstufe (4) zugegeben werden kann.
